# EUROPEAN PATENT SPECIFICATION

(11) **EP 1 321 890 B1**
(45) Date of publication and mention of the grant of the patent: **02.11.2006**
(21) Application number: 01830772.8
(22) Date of filing: 18.12.2001
(51) Int. Cl.: G06K 19/16, G06K 19/14, G02B 26/10

(54) **Optical data carrier having an optical diffractive code, and related reading apparatus**
Optischer Datenträger mit einem auf optischer Beugung basierenden Code, und zugehöriges Lesegerät
Support de données optique avec un code optique diffractive, et son lecteur

(43) Date of publication of application: 25.06.2003
(73) Proprietor: ISTITUTO POLIGRAFICO E ZECCA DELLO STATO, 00198 Roma (IT)
(72) Inventor: Casini, Michela, Ist. Poligrafico e Zecca dello St, 00198 Roma (IT); Luciani, Laura, Ist Poligrafico e Zecca dello Stat, 00198 Roma (IT); Lucentini, Flavio, Gruppo Testa Elettronica Srl, 02010 Lisciano RI (IT)
(74) Representative: Papa, Elisabetta

(56) References cited:
- EP-A- 1 067 535
- DE-A- 3 932 505
- DE-A- 19 812 346
- FR-A- 2 719 687
- JP-A- 2001 067 724
- US-A- 5 145 212
- US-A- 6 052 354

## Description

The present invention refers to an optical variable device having an optical diffractive code and to a related reading apparatus.

For optical variable device (generally indicated with the acronym OVD) an authentication element having an optical diffractive profile, e.g. a hologram, is meant. This profile can implement a so-called optical diffractive code, i.e., an image detectable upon exposing the OVD to an electromagnetic wave beam, like a monochromatic light beam or a laser beam.

OVDs are widely used as anticounterfeit elements on banknotes, credit cards, identification cards and papers and products like value papers in general, since they are not reproducible by conventional printing techniques and can carry machine-readable information.

In order to make counterfeiting more difficult, the diffractive profile of an OVD can contain a cryptographed optical diffractive code, i.e., a code detectable solely upon exposing the OVD to an electromagnetic wave beam of a determined wavelength.

In general, experience in the field of authentication showed that counterfeiting difficulties increase with the increasing of the complexity of the diffractive profile of the OVD.

A practical example of OVD application on value papers is disclosed in Swiss Patent 622896, referring to an optical diffractive code based on a set of dots having different luminosity which is used as reading and erasing system of prepaid telephone cards. This patent corresponds to US 4 250 393.

Instead, International Application WO 92/22039 advances the use of optical memories constructed by complex diffraction gratings, for applications on telephone cards, credit cards and safety papers in general.

Moreover, European Patent Application EP 0640891 discloses a hologram that, when lighted, produces two images, one visible and the other one being readable solely via a decoding device. Also, reference is made to Swiss Patent 16084/79.

Finally, the use of a strip-shaped optical diffractive code on plastic cards is taught in Swiss Patent 638632.

However, known OVDs are less than satisfactory in terms of copying difficulties, i.e. of counterfeiting, problems. Moreover, these often are highly complex and expensive to manufacture.

FR 2 719 687 discloses documents marked to avoid fraud using means of identification such as a printed bar code and a superimposed optical diffracting authentication.

Double sided DVDs are known from DE 19 812 346, EP 1 067 535 and JP 2001/067724. Such DVDs have a reflective rather than diffractive surface.

US 6 052 354 describes an optical data storage medium having a storage area with a plurality of diffractive optical elements which can focus a beam of light incident on the storage area onto one or more points. Parallel writing/reading can occur in several parallel storage layers.

US 5 145 212 describes a carrier having two holograms obtained on superimposed layers for authenticating documents and things. The claims are delimited against this document.

The technical problem underlying the present invention is to provide an optical variable device having an optical diffractive code, a process for the manufacturing thereof and a related reading apparatus alternative to the known systems and enabling to overcome the abovementioned drawbacks.

This problem is solved by an optical variable device according to claim 1.

According to the same inventive concept, the present invention further refers to a reading apparatus according to claim 14.

The invention further provides a manufacturing process of an optical variable device as abovedefined according to claim 21.

The present invention provides several relevant advantages.

The main advantage lies in that said multilevel construction based on two diffractive structures generating independent signals is not reproducible by traditional holographic copying techniques. This spatial independence of the two diffracted signals causes the code implemented by the first diffractive structure, i.e. that hereto indicated as control code, to act as access key to the reading of the information implemented by the second diffractive structure, actually referred to as information code.

In particular, as it will be made apparent in the following detailed description, counterfeiting is complicated by the fact that the device of the invention is provided with said optical control code acting as access key to said optical information code.

Moreover, the diffractive profiles of the device of the invention are obtainable by a process simpler and more cost-effective with respect to other multilevel technologies using vacuum deposition techniques like, e.g., the so-called 'dry-etching'.

Furthermore, said multilevel structure enables a concomitant reading of the entire area interested by the optical variable device instead of a sequential reading thereof.

Other advantages, features and modes of employ of the present invention will be made apparent in the following detailed description of some embodiments thereof, given as a non-limiting example. Reference will be made to the figures of the annexed drawings, wherein:
Figure 1 is a perspective view of an embodiment of an optical variable device according to the present invention;
Figure 2 is a block diagram related to a reading apparatus of an optical variable device according to the invention;
Figure 3 is a schematic perspective view of a variation of the apparatus of Figure 2; and
Figures 4A to 4D each refer to a respective step of the method for manufacturing the device of Figure 1, depicting schematic front views.

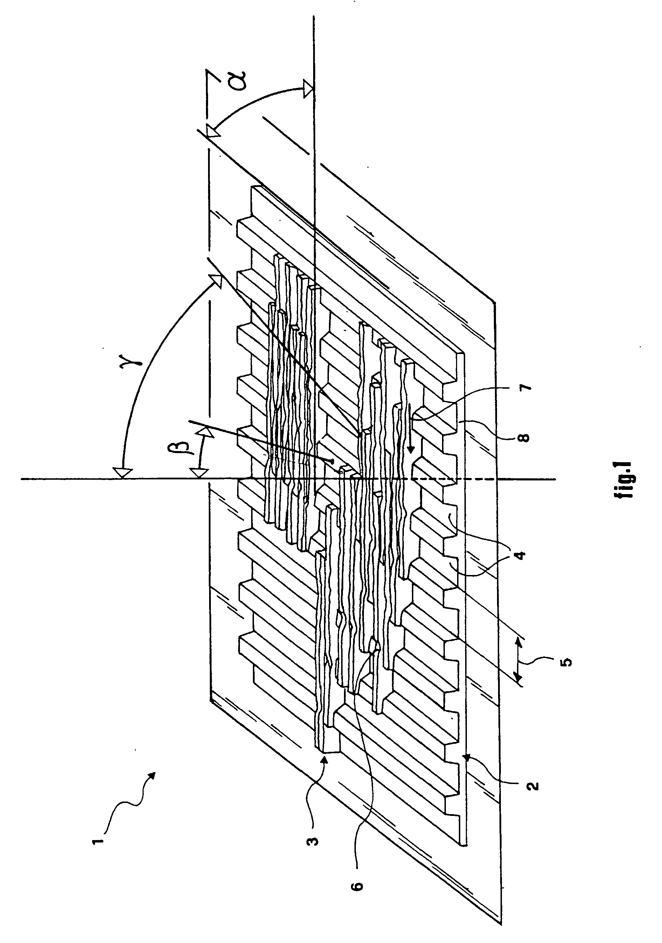

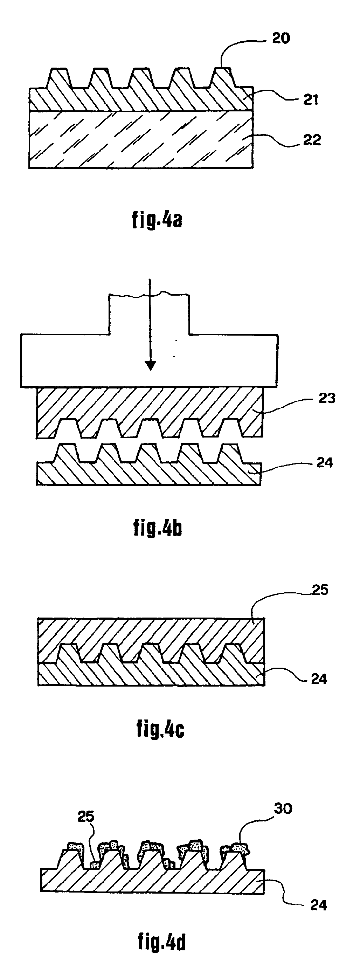

The illustrations of Figure 1 and 4A to 4D should be construed to be purely by way of example. In particular, the dimensions or the structures depicted therein are highly magnified.

With initial reference to Figure 1, an optical variable device according to the invention, hereinafter referred to as OVD, is generally indicated with 1.

OVD 1 provides a multilevel construction, in particular comprising a first and a second diffractive structure, 2 and 3 respectively, overlapped therebetween. Such structures 2 and 3 are obtained on a support 8 consisting, e.g., of a metalized ribbon or other refractive material. The structures 2 and 3 implement each a respective optical diffractive code, hereinafter referred to as control code and information code for reasons that will be made apparent later on, detectable upon exposing the OVD 1 to a monochromatic, preferably coherent beam of electromagnetic wave, in the present embodiment a laser beam.

In particular, the first diffractive structure 2, i.e., in this case the lower structure, is a simple diffractive grating consisting of a plurality of parallel grooves having a substantially rectilinear development, each of which indicated with 4. The grooves 4 are arranged according to a constant pitch, indicated with a reference arrow 5, which is preferably comprised in a range of about 1 to 4 µm.

The second diffractive structure 3, i.e., in this case the upper structure, is obtained on a level immediately adjacent to the level of the first structure 2, in order to have the latter modulate the thickness thereof. Hence, the OVD 1 is a Grating Modulated Cryptogram or GMC.

Concerning the optimal dimensions of the reading area, the teachings of the Italian Patent 1 264 651 (extended as W09501614) hold true.

The second diffractive structure 3 has a more complex configuration with respect to the first structure 2, comprising a plurality of microetchings, one thereof being indicated by way of example with 6. The average direction of such microetchings determines a prevalent development direction of the second structure 3, indicated with an arrow 7.

The microetchings at issue implement said information diffractive code, which in the present embodiment is of a dot matrix type. As it is known, in this type of code the information is codified by the presence or by the absence of dots at predetermined matrix-defined locations.

More in detail, in the present embodiment the information diffractive code is a dot Fourier cryptogram consisting of a matrix of (*n*x*m*) dots, wherein the first (*n*-1) and/or (*m*-1) dots of each row and/or column of the matrix codifies alphanumeric characters, and the last dot of each row and column is used for parity control. Hence, the memory capacity of this code is equal to 2^{(*n*-1)}x2^{(*m-1*)} possible combinations. In fact, the parity control univocally determines the values of the last row and of the last column.

It will be appreciated that the adoption of a dot matrix code yields a high degree of reading repeatability, together with a high number of cryptographed data.

Of course, variant embodiments can provide a different type of coding, as well as a different type of information carried by the diffractive code, e.g., a graphic image, a bar code, any geometrical pattern, etc.

The direction of the grooves 4 of the first structure 2 is transversal to said prevalent development direction 7 of the second structure 3, forming therewith an angle α which in the present embodiment is equal to about 90 deg. . Preferably, said angle will anyhow be comprised in a range of about 45 to 90 deg.

In general, as it will be detailed with reference to the employ modes of the OVD of the invention, said angle α and the shape of the diffractive structures according to the invention, i.e. the overall construction of the OVD, must enable anyway, upon exposing the OVD to a laser beam, each structure to deviate such incident laser beam into one or more diffracted beams spatially independent from the one or more diffracted electromagnetic wave beams originated by the other structure. In other words, the diffracted beam or beams related to one of the structures should be detectable by detecting means spatially distinct from those related to the other structure.

In Figure 1, a generic diffraction angle related to the first diffractive structure 2 is indicated with β, whereas the mean diffraction angle related to the second structure 3 is indicated with γ.

It will be understood that, in a variant embodiment, the arrangement of the diffractive structures 2 and 3 can be reversed, i.e., the first structure 2 can be overlapped to the second structure 3.

Moreover, the diffractive structure 2 can be partially exposed, i.e. made partially visible, by the structure 3, and it can be used as an ornament of element by inserting microwritings and/or graphic patterns like electronic guilloche.

It will be understood that the hereto described OVD 1 can be applied onto any type of support requiring an authentication element, during the same manufacturing process thereof or in a separate step, and in particular on banknotes, credit cards, identification cards and papers, labels, authentication tags, security seals and products like safety and value papers in general. In particular, the OVD 1 can be obtained directly on such banknotes, credit cards etc. in the same manufacturing process thereof.

In the present embodiment, the OVD 1 is assumed to be applied onto an electronic identification card, generally referred to as ID card.

Hereinafter, a reading apparatus according to the present invention to be used in association with said ID card having the hereto-described OVD 1 will be described. By way of example, it will be assumed that said ID card be issued to an operator in order to access a determined working area.

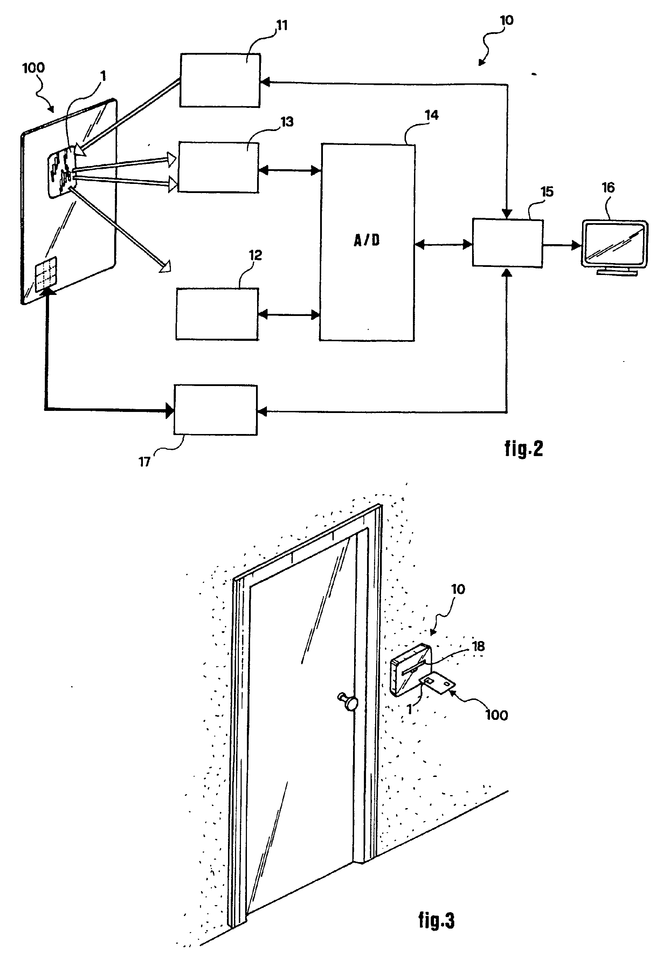

With reference to Figure 2, a reading apparatus according to the invention is indicated with 10. The apparatus 1 comprises a unit 11 emitting a substantially monochromatic electromagnetic wave beam, in this case a laser beam, apt to be incident onto the OVD 1 of said ID card, indicated with 100, to reveal the information coded by the first and by the second diffractive structures 2 and 3.

The apparatus 10 further comprises a first unit 12 for detecting the control code associated with the first diffractives structure 2, based on first detecting means which in the present embodiment are photodiode sensing means.

The apparatus 10 further comprises a second unit 13 for detecting the information codified by the second diffractive structure 3. In the present embodiment, the latter comprises an image focusing optical unit and second detecting means consisting of a so-called CCD detector system, arranged at a position distinct from that of the sensing means of the first unit 12.

Both the first and second detecting means introduced so far provide the use of a respective photosensitive acquisition element enabling to concomitantly acquire the entire cryptographed image and not only individual dots or zones therein.

Further, the apparatus 10 enables, in a processing unit 15 which will be introduced later on, a processing of the acquired pattern by mathematical algorithms which take into account the entire acquired area and not individual dots or well-defined and identified reference zones. This yields an elevated design flexibility of the cryptogram and of the related code 'hidden' therein.

As a result of the described process and features, the cryptogram readable by the apparatus 10 can represent codes known and already in use, like, e.g. a bar code, as well as codes worked out and developed solely and exclusively for a single application.

Both the first and the second detecting unit 12 and 13 communicate, via conventional-type data transmitting/receiving means, with a digitizing unit 14, in turn communicating with said processing unit 15. The latter typically consists of a processor or microprocessor comprising known hardware and software means. In particular, such processing unit 15 comprises memory means for the storing of authentic data and comparing means for comparing such data to those codified by the OVD 1 of the ID card 100.

The processing unit 15 controls also the emitting unit 11, directly or via the digitizing unit 14.

In the present embodiment, the processing unit 15 further comprises automated driving means of the emitting unit 11, in order to enable this unit to emit a laser beam as soon as the ID card 100 is inserted in the apparatus 10.

Finally, in the present embodiment the processing unit 15 provides means for validating and/or decrypting external data acquired by an additional data acquisition unit 17 described hereinafter.

Further, the processing unit 15 communicates with a communication unit 16, apt to provide data to a local or remote operator. In the present embodiment, the communication unit 16 is a visualisation unit comprising a monitor or a single display, and the data communicated to the operator are indications about the authenticity of the ID card 100. This visualisation unit 16 can be associated with or replaced by another unit for communicating the data detected by the apparatus 10, e.g. a transmitting unit.

The abovementioned additional data acquisition unit 17, it also communicating with the processing unit 15, is apt to read data from sources external to the apparatus 10, like, e.g., badge readers, data flows from computers, etc. This additional data acquisition unit 17 is also connected to the communication unit 16 for the possible transfer of said data externally to the apparatus 10.

In the present embodiment, it is provided that such data acquisition unit 17 is apt to detect further information stored on the ID card 100, e.g. a user's personal data stored on a dedicated microchip.

It will be understood that the block diagram of Figure 2 should be construed merely by way of example. In particular, some of the units indicated as distinct on this diagram could practically be incorporated into a single module, and vice versa.

It will further be understood that, though hereto reference has been made to a first and to a second detecting unit of an optical-type, the reading of the control and/or of the information code carried by the diffractive structures of the OVD of the invention could also take place by detecting units comprising electronic-type reading means.

The employ modes of the OVD 1 and of the related reader will hereinafter be illustrated, always with reference to Figure 2.

First of all, at the request for identification, the user provides the ID card 100 to an operator who inserts the latter in the apparatus 10, in correspondence of a suitable slot thereof.

At insertion of the ID card 100, said automated driving means commands the emission of a laser beam by the emitting unit 11. The arrangement is such that this laser beam invests the OVD 1 and is differently diffracted by the two abovedescribed diffractive structures 2 and 3. In particular, the first diffractive structure 2 diffracts the signal in the direction of the first detecting unit 12, whereas the information codified by the second diffractive structure 3 forms as an image on a plane parallel to that of the OVD 1, i.e. of the ID card 100, in correspondence of the detectors of the second detecting unit 13. This image is focused by the focusing unit and transferred onto the working plane of the capture CCD detector. As abovementioned, the shape of the two diffractive structures 2 and 3 enables such spatial independence of the diffracted signals, and therefore an independent reading of the associated codes.

This spatial independence of the two diffracted signals causes the code implemented by the first diffractive structure 2, i.e. that hereto indicated as control code, to act as access key to the reading of the information implemented by the second diffractive structure 3, actually referred to as information code.

Then, the signals detected by the two detecting units 12 and 13 are digitized in the unit 14 and transferred, e.g., in DMA mode, to the processing unit 15. The latter compares the data read onto the OVD 1 to the stored data in order to verify the authenticity of the ID card 100.

In the present embodiment, this authenticity is verified by checking the presence of a signal detected by the first detecting unit 12, and, in the affirmative case, comparing the information code of the second diffractive structure 3 to the data stored in the processing unit 15 of the apparatus 10.

Preferably, the processing unit 15 also comprises means for reconstructing the signal codified by the diffractive structures 2 and 3 also in presence of a certain level of detection noise.

Of course, in case one or both the detecting units 12 and 13 have not detected any diffracted signal, these will transmit a signal to the processing unit 15. Evidently, the latter case occurs when the ID card 100 is counterfeited or anyhow not suitable to the type of abilitation or identification requested. For example, the ID card 100 could lack one of the two diffractive structures 2, 3, or the first diffractive structure could diffract the incident laser beam in a direction different from that provided by the location of the sensors of the first detecting unit 12.

In the case both codes associated with the first and to the second diffractive structure 2 and 3 correspond to the expected ones, the apparatus 10, via the visualisation unit 16, provides a corresponding consensus indication to the operator.

Of course, the information codified by the OVD 1 can also be used to validate the further data detected by the data acquisition unit 17. In particular, the information of the OVD 1 can be employed to decrypt the data read by the data acquisition unit 17. Thus, the apparatus 10 can act as validator or decoder of external cryptographed data flows.

Hence, in light of the above, the reading apparatus according to the invention enables the acquisition and the decoding of cryptograms having any pattern whatsoever, like, e.g., a logo or a code in general, and also, when suitable software and/or hardware means be pre-set therein, the analysis and the use in general of the decoded cryptograms.

Further, Figure 3 refers to a variant embodiment wherein a user inserts directly the ID card 100 in a slot 18 of the apparatus 10, which in this case comprises a processing unit apt to directly enable the user to access the working area by commanding the opening of a door. In a further variant, the apparatus 10 could directly enable the operation of an access bar.

It will now be better appreciated that the OVD of the invention provides a twofold anticounterfeiting security, by virtue of the fact that it has two codes, a control code and an information code. Moreover, in the hereto-considered embodiment example, the anticounterfeiting effectiveness is enhanced by the fact that said codes are not revealed by white light, i.e., they are cryptographed.

It will further be appreciated that the choice of cryptographed codes revealable by a laser beam enables a cost-effective implementation of the reading apparatus.

The abovedescribed OVD and the related optical reading apparatus are susceptible of several further embodiments.

In light of a second embodiment of OVD, the latter has cryptographed information revealed by a monochromatic electromagnetic wave beam not necessarily from a laser-type source. Of course, the detecting units of the related reading apparatus will be modified accordingly.

Moreover, the same OVD could have different codes, e.g., in correspondence of the second diffractive structure, each detectable by a specific reading apparatus or by different decoding algorithms.

In light of another embodiment, the data to be compared to those coded by the OVD can be stored, rather than in the memory of the processing unit, on a further support, e.g. a control card, insertable at a further input of the reading apparatus belonging to said additional data acquisition unit, e.g., another slot. Moreover, the information coded by the OVD can be used for a cross decoding of the data stored on such further support.

Further, in light of an alternative embodiment of the reading apparatus, the latter could be implemented in modules, also in order to be adjustable to the reading of different supports onto which the OVD be applied.

In fact, it will be understood that the abovedescribed OVD can be applied on any type of support, e.g. on a banknote. In the latter case, the authenticity of the banknote itself could be verified by a reading apparatus analogous to that of the first embodiment, optionally further providing an automatic feeder in lieu of said manual insertion slot.

Hereinafter, an optional manufacturing process of the OVD of the present invention will be described.

As it is shown in Figure 4A, in a first step of the process a first diffractive profile 20 in form of a grating, corresponding to said first diffractive structure, is recorded on a layer 21 made of positive-type photosensitive material. As mentioned above, for diffractive profile an arrangement of microetchings which, illuminated by a monochromatic electromagnetic beam, deviates the latter into plural diffracted beams according to different diffraction orders is to be understood.

Said first profile 20 could be recorded by a traditional holographic technique, by way of which the wavefront coming from an object is made to interfere with a reference beam, in this case a laser beam of preferred wavelength equal to 413 nm, or by dot-by-dot writing techniques with a focused laser source or an electronic beam.

According to a typical embodiment, said profile 20 is recorded onto the photosensitive material 21 previously deposited on a glass support 22 and transferred on a plate 23 of nickel or of other metal obtained by a known electroforming process in a galvanic bath.

As it is indicated in Figure 4B, the nickel plate 23 is then used to imprint the profile on a plastic support 24, e.g. of black plexiglas, by injection molding, embossing or in general by hot pressing. Also this step is well known to those skilled in the art, therefore it will not further be detailed hereinafter.

Therefore, as it is indicated in Figure 4C, onto the plexiglas support 24 a layer 25 made of negative-type photosensitive material, preferably having a thickness equal to about 1 µm, is deposited.

Then, the plate thus obtained is exposed for the recording of a second diffractive profile 30, corresponding to the abovedescribed second diffractive structure, in correspondence of the same region having the first diffractive profile 20.

Hence, the etching depth of this second profile 30 is modulated by the first profile 20. Then the plate is developed by a standard process, and the obtained multilevel construction is transferred, e.g. by electroforming in a galvanic bath, onto a support suitable for the mass-production recording of OVDs as the abovedescribed one.

It will presently be appreciated that the modulation of the profile of the second diffractive structure by the profile of the first structure yields a complex-shape final profile, typically having a greater etching depth with respect to the known OVDs. As it will be apparent to a person skilled in the art, this simplifies the steps of mechanical forming by molding or embossing. In fact, the replication processes of the diffractive profiles of the OVDs on metalized or refractive ribbon entail a reduction of the etching depth. For the thin diffractive structures, the diffraction effectiveness and hence the signal luminosity depends on the etching depth, a favourable profile ensuring losses be kept low during said forming processes.

The present invention has hereto been described with reference to preferred embodiments thereof. It is understood that there may be other embodiments concerning the same inventive concept, all falling within the protective scope of the claims set forth hereinafter.

## Claims

1. An optical data carrier (1) having a multilevel construction, the data carrier comprising a first (2) and a second (3) diffractive structure obtained on overlapped levels,
the construction being such that, when the carrier is exposed to a substantially monochromatic beam of electromagnetic waves, each of said structures deviates such incident beam into one or more diffracted beams spatially independent from the one or more diffracted beams originated by the other structure,
**characterized in that** one (3) of said structures has an information diffractive code and the other one (2) of said structures has a control diffractive code apt to act as read key for said information code.

2. The data carrier (1) according to claim 1, wherein said diffractive structure (3) having said information code is overlapped to and modulated in thickness by said diffractive structure (2) having said control code.

3. The data carrier (1) according to claim 1 or 2, wherein said diffractive codes are revealable by a laser beam.

4. The data carrier (1) according to any one of the preceding claims, wherein said diffractive structure (2) having said control code comprises a diffraction grating made of a plurality of parallel grooves (4) extending according to a substantially straight line.

5. The data carrier (1) according to the preceding claim, wherein said grooves (4) are arranged according to a constant pitch (5).

6. The data carrier (1) according to any one of the preceding claims, wherein said information code is a dot matrix code.

7. The data carrier (1) according to the preceding claim, wherein said information code is a dot Fourier cryptogram.

8. The data carrier (1) according to any one of the preceding claims, wherein said information code codifies alphanumeric characters.

9. The data carrier (1) according to any one of the preceding claims, wherein said diffractive structures (2, 3) have each a respective prevalent development direction, said directions forming therebetween an angle (α) comprised in a range of about 45 to 90 deg.

10. The data carrier (1) according to any one of the preceding claims, wherein one of said diffractive structures (2) has a control code and the other one (3) of said structures has a plurality of information codes.

11. The data carrier (1) according to the preceding claim, wherein one code of said plurality of information codes is revealable by a light beam having a wavelength within the visible spectrum.

12. The data carrier (1) according to any one of the preceding claims, applied onto a support (100) selected from a group comprising banknotes, credit cards, identification cards and papers, labels, authentication tags, security seals and value papers.

13. The data carrier (1) according to any one of the preceding claims, wherein said diffractive structure (2) having said control code is partially visible and it is used as an ornamental element.

14. A reading apparatus (10) apt to be used in association with an optical data carrier
(1) comprising a first (2) and a second (3) diffractive structure obtained on overlapped levels , which reading apparatus comprises:
- an emitting unit (11) emitting a substantially monochromatic beam of electromagnetic waves;
- a first detecting unit (12), for detecting a control code of the first diffractive structure (2) of the optical data carrier, comprising first detecting means;
- a second detecting unit (13), for detecting an information code of the second diffractive structure (3) of the optical data carrier, comprising second detecting means arranged at a position distinct from that of the first detecting means; and
- a processing unit (15), apt to verify the authenticity of the optical data carrier according to the detections of said detecting units
**characterized in that** the reading apparatus is configured in such a way that the control code of the first diffractive structure (2) is used as read key to the reading of the information code of the second diffractive structure (3).

15. The apparatus (10) according to claim 14, wherein said emitting unit is a laser emitting unit (11).

16. The apparatus (10) according to claim 14 or 15, wherein said second detecting unit (13) comprises a focusing optical unit and a CCD detector system.

17. The apparatus (10) according to any one of the claims 14 to 16, comprising a visualisation unit (16) apt to provide an indication about the authenticity of the optical data carrier (1) to an operator.

18. The apparatus (10) according to any one of the claims 14 to 17, comprising a further data acquisition unit (17), apt to read data from sources external to the apparatus itself.

19. The apparatus (10) according to the preceding claim, wherein said further data acquisition unit (17) is apt to acquire data stored in a support (100) carrying the optical data carrier (1).

20. The apparatus (10) according to any one of the claims 14 to 19, wherein said first and/or second detecting means comprises a photosensitive element enabling to concomitant acquisition of the entire cryptographed image.

21. A manufacturing process of an optical data carrier (1) comprising a first (2) and a second (3) diffractive structure obtained on overlapped levels, which process comprises the steps of:
- obtaining a first diffractive profile (20) (2) encoding a control code, on a first layer (21) of photosensitive material;
- transferring said first diffractives profile on a metal plate (23);
- imprinting said first diffractive profile of said metal plate onto a plastic support (24);
- depositing a second layer (25) of photosensitive material on said plastics support; and
- obtaining a second diffractives profile (30)encoding an information code, on said second layer of photosensitive material, onto of the same region having said first diffractive profile (20),
**characterized in that** said control code and said information code are manufactured in such a way that the former is apt to act as read key for the latter.

22. The process according to claim 21, wherein said first layer (21) of photosensitive material is made of a positive-type photosensitive material.

23. The process according to claim 21 or 22, wherein said second layer (25) of photosensitive material is made of a negative-type photosensitive material.

## Patentansprüche

1. Optischer Datenträger (1) mit einem Mehrebenenaufbau, wobei der Datenträger eine erste und eine zweite beugende Struktur (2, 3) aufweist, die auf überlappten Ebenen hergestellt sind,
wobei der Aufbau so ist, dass, wenn der Träger mit einem im wesentlichen monochromatischen Bündel elektromagnetischer Wellen beaufschlagt wird, jede der Strukturen dieses einfallende Bündel in ein oder mehrere gebeugte Bündel ablenkt, die von dem einen oder den mehreren gebeugten Bündeln, die von der anderen Struktur erzeugt werden, räumlich unabhängig sind,
**dadurch gekennzeichnet, dass** eine (3) der Strukturen einen beugenden Informationscode hat und dass die andere (2) der Strukturen einen beugenden Steuerungscode hat, der in der Lage ist, als ein Leseschlüssel für den Informationscode zu dienen.

2. Datenträger (1) nach Anspruch 1, wobei die beugende Struktur (3), die den Informationscode hat, durch die beugende Struktur (2), die den Steuerungscode hat, überlappt und in der Dicke moduliert ist.

3. Datenträger (1) nach Anspruch 1 oder 2, wobei die beugenden Codes durch einen Laserstrahl aufdeckbar sind.

4. Datenträger (1) nach einem der vorhergehenden Ansprüche, wobei die beugende Struktur (2), die den Steuerungscode hat, ein Beugungsgitter aufweist, das aus einer Vielzahl von parallelen Rillen (4) besteht, die sich gemäß einer im Wesentlichen geraden Linie erstrecken.

5. Datenträger (1) nach dem vorhergehenden Anspruch, wobei die Rillen (4) mit einer konstanten Teilung (5) angeordnet sind.

6. Datenträger (1) nach einem der vorhergehenden Ansprüche, wobei der Informationscode ein Punktmatrixcode ist.

7. Datenträger (1) nach dem vorhergehenden Anspruch, wobei der Informationscode ein Punkt-Fourier-Kryptogramm ist.

8. Datenträger (1) nach einem der vorhergehenden Ansprüche, wobei der Informationscode alphanummerische Zeichen codifiziert.

9. Datenträger (1) nach einem der vorhergehenden Ansprüche, wobei die beugenden Strukturen (2, 3) jeweils eine überwiegende Entwicklungsrichtung haben und wobei die Richtungen zwischen sich einen Winkel (α) bilden, der in einem Bereich von etwa 45 bis 90 Grad liegt.

10. Datenträger (1) nach einem der vorhergehenden Ansprüche, wobei eine der beugenden Strukturen (2) einen Steuerungscode und die andere (3) der Strukturen eine Vielzahl von Informationscodes hat.

11. Datenträger (1) nach dem vorhergehenden Anspruch, wobei ein Code der Vielzahl von Informationscodes durch einen Lichtstrahl aufdeckbar ist, der eine Wellenlänge innerhalb des sichtbaren Spektrums hat.

12. Datenträger (1) nach einem der vorhergehenden Ansprüche, aufgebracht auf einen Träger (100), der aus einer Gruppe ausgewählt ist, die Banknoten, Kreditkarten, Identifikationskarten und Papiere, Etiketten, Beglaubigungsetiketten, Sicherheitssiegel und Wertpapiere umfasst.

13. Datenträger (1) nach einem der vorhergehenden Ansprüche, wobei die beugende Struktur (2), die den Steuerungscode hat, teilweise sichtbar ist und als ein ornamentales Element verwendet wird.

14. Lesevorrichtung (10), die verwendet werden kann in Zuordnung zu einem optischen Datenträger (1), der eine erste und eine zweite beugende Struktur (2, 3) umfasst, die auf überlappten Ebenen hergestellt sind, wobei die Lesevorrichtung aufweist:
- eine emittierende Einheit (11), die ein im Wesentlichen monochromatisches Bündel von elektromagnetischen Wellen emittiert;
- eine erste Erfassungseinheit (12) zum Erfassen eines Steuerungscodes der ersten beugenden Struktur (2) des optischen Datenträgers, die die erste Erfassungseinrichtung aufweist;
- eine zweite Erfassungseinheit (13) zum Erfassen eines Informationscodes der zweiten beugenden Struktur (3) des optischen Datenträgers, die eine zweite Erfassungseinrichtung aufweist, welche in einer Position angeordnet ist, die von der der ersten Erfassungseinrichtung verschieden ist; und
- eine Verarbeitungseinheit (15), die in der Lage ist, die Echtheit des optischen Datenträgers gemäß den Erfassungen der Erfassungseinheiten zu überprüfen,
**dadurch gekennzeichnet, dass** die Lesevorrichtung derart konfiguriert ist, dass der Steuerungscode der ersten beugenden Struktur (2) als ein Leseschlüssel zum Lesen des Informationscodes der zweiten beugenden Struktur (3) verwendet wird.

15. Vorrichtung (10) nach Anspruch 14, wobei die emittierende Einheit eine emittierende Lasereinheit (11) ist.

16. Vorrichtung (10) nach Anspruch 14 oder 15, wobei die zweite Erfassungseinheit (13) eine optische Fokussiereinheit und ein CCD-Detektorsystem aufweist.

17. Vorrichtung (10) nach einem der Ansprüche 14 bis 16, mit einer Sichteinheit (16), die in der Lage ist, eine Anzeige über die Echtheit des optischen Datenträgers (1) einer Bedienungsperson zu liefern.

18. Vorrichtung (10) nach einem der Ansprüche 14 bis 17, mit einer weiteren Datenakquisitionseinheit (17), die in der Lage ist, Daten aus Quellen außerhalb der Vorrichtung selbst zu lesen.

19. Vorrichtung (10) nach dem vorhergehenden Anspruch, wobei die weitere Datenakquisitionseinheit (17) in der Lage ist, Daten zu akquirieren, die in einem Träger (100) gespeichert sind, der den optischen Datenträger (1) trägt.

20. Vorrichtung (10) nach einem der Ansprüche 14 bis 19, wobei die erste und/oder die zweite Erfassungseinrichtung ein lichtempfindliches Element aufweist, das die begleitende Akquisition des gesamten verschlüsselten Bildes ermöglicht.

21. Fertigungsverfahren für einen optischen Datenträger (1) mit einer ersten und einer zweiten beugenden Struktur (2, 3), die auf überlappten Ebenen hergestellt sind, wobei das Verfahren die Schritte beinhaltet:
- Herstellen eines ersten beugenden Profils (20), das einen Steuerungscode codiert, auf einer ersten Schicht (21) lichtempfindlichen Materials;
- Übertragen des ersten beugenden Profils auf eine Metallplatte (23);
- Drucken des ersten beugenden Profils der Metallplatte auf einen Kunststoffträger (24);
- Auftragen einer zweiten Schicht (25) lichtempfindlichen Materials auf den Kunststoffträger;
- Herstellen eines zweiten beugenden Profils (30), das einen Informationscode codiert, auf der zweiten Schicht lichtempfindlichen Materials in demselben Gebiet, welches das erste beugende Profil (20) hat,
**dadurch gekennzeichnet, dass** der Steuerungscode und der Informationscode derart gefertigt werden, dass ersterer in der Lage ist, als Leseschlüssel für letzteren zu dienen.

22. Verfahren nach Anspruch 21, wobei die erste Schicht (21) lichtempfindlichen Materials aus einem lichtempfindlichen Positivmaterial besteht.

23. Verfahren nach Anspruch 21 oder 22, wobei die zweite Schicht (25) lichtempfindlichen Materials aus einem lichtempfindlichen Negativmaterial besteht.

## Revendications

1. Support de données optiques (1) ayant une construction multi-niveaux, le support de données comportant une première (2) et une seconde (3) structures diffractives obtenues sur des niveaux recouverts,
la construction étant telle que, lorsque le support est exposé à un faisceau en grande partie monochromatique d'ondes électromagnétiques, chacune desdites structures dévie ce faisceau incident dans un ou plusieurs faisceaux diffractés spatialement indépendants du ou des faisceaux diffractés produits par l'autre structure,
**caractérisé en ce que** l'une (3) desdites structures a un code diffractif d'informations et l'autre (2) desdites structures a un code diffractif de commande susceptible d'agir en tant que clé de lecture pour ledit code d'informations.

2. Support de données (1) selon la revendication 1, dans lequel ladite structure diffractive (3) ayant ledit code d'informations recouvre ladite structure diffractive (2) ayant ledit code de commande et est modulée en épaisseur par celle-ci.

3. Support de données (1) selon la revendication 1 ou 2, dans lequel lesdits codes diffractifs peuvent être révélés par un faisceau laser.

4. Support de données (1) selon l'une quelconque des revendications précédentes, dans lequel ladite structure diffractive (2) ayant ledit code de commande comporte un réseau de diffraction constitué d'une pluralité de sillons parallèles (4) s'étendant conformément à une ligne en grande partie droite.

5. Support de données (1) selon la revendication précédente, dans lequel lesdits sillons (4) sont agencés conformément à un pas constant (5).

6. Support de données (1) selon l'une quelconque des revendications précédentes, dans lequel ledit code d'informations est un code à matrice de points.

7. Support de données (1) selon la revendication précédente, dans lequel ledit code d'informations est un cryptogramme de Fourier à points.

8. Support de données (1) selon l'une quelconque des revendications précédentes, dans lequel ledit code d'informations codifie des caractères alphanumériques.

9. Support de données (1) selon l'une quelconque des revendications précédentes, dans lequel lesdites structures diffractives (2, 3) ont chacune une direction de développement prédominante respective, lesdites directions formant entre elles un angle (α) compris dans une plage d'environ 45 à 90 degrés.

10. Support de données (1) selon l'une quelconque des revendications précédentes, dans lequel l'une desdites structures diffractives (2) a un code de commande et l'autre (3) desdites structures a une pluralité de codes d'informations.

11. Support de données (1) selon la revendication précédente, dans lequel un code de ladite pluralité des codes d'informations peut être révélé par un faisceau lumineux ayant une longueur d'onde comprise dans le spectre visible.

12. Support de données (1) selon l'une quelconque des revendications précédentes, appliqué sur un support (100) sélectionné à partir d'un groupe comportant des billets de banque, des cartes de crédit, des cartes et des papiers d'identité, des étiquettes, des étiquettes d'authentification, des sceaux de sécurité et des documents de valeur.

13. Support de données (1) selon l'une quelconque des revendications précédentes, dans lequel ladite structure diffractive (2) ayant ledit code de commande est partiellement visible et est utilisée en tant qu'élément décoratif.

14. Dispositif de lecture (10) susceptible d'être utilisé en associé avec un support de données optiques (1) comportant une première (2) et une seconde (3) structures diffractives obtenues sur des niveaux recouverts, lequel dispositif de lecture comporte :
- une unité d'émission (11) émettant un faisceau en grande partie monochromatique d'ondes électromagnétiques,
- une première unité de détection (12) pour détecter un code de commande de la première structure diffractive (2) du support de données optique, comportant des premiers moyens de détection,
- une seconde unité de détection (13), pour détecter un code d'informations de la seconde structure diffractive (3) du support de données optiques, comportant des secondes moyens de détection agencés à une position distincte de celle des premiers moyens de détection, et
- une unité de traitement (4), susceptible de vérifier l'authenticité du support de données optiques conformément aux détections desdites unités de détection,
**caractérisé en ce que** le dispositif de lecture est configuré de telle manière que le code de commande de la première structure diffractive (2) est utilisé en tant que clé de lecture pour la lecture du code d'informations de la seconde structure diffractive (3).

15. Dispositif (10) selon la revendication 14, dans lequel ladite unité d'émission est une unité d'émission laser (11).

16. Dispositif (10) selon la revendication 14 ou 15, dans lequel ladite seconde unité de détection (13) comporte une unité optique de focalisation et un système de détecteurs CCD.

17. Dispositif (10) selon l'une quelconque des revendications 14 à 16, comportant une unité de visualisation (16) susceptible de délivrer une indication concernant l'authenticité du support de données optiques (1) à un opérateur.

18. Dispositif (10) selon l'une quelconque des revendications 14 à 17, comportant une unité d'acquisition de données (17) supplémentaire, susceptible de lire des données à partir de sources externes au dispositif lui-même.

19. Dispositif (10) selon la revendication précédente, dans lequel ladite unité d'acquisition de données (17) supplémentaire est susceptible d'acquérir des données mémorisées dans un support (100) supportant le support de données optiques (1).

20. Dispositif (10) selon l'une quelconque des revendications 14 à 19, dans lequel lesdits premiers et/ou seconds moyens de détection comportent un élément photosensible permettant une acquisition concomitante de l'image cryptographiée entière.

21. Processus de fabrication d'un support de données optiques (1) comportant une première (2) et une seconde (3) structures diffractives obtenues sur des niveaux recouverts, lequel processus comporte les étapes consistant à :
- obtenir un premier profil diffractif (20) (2) en codant un code de commande, sur une première couche (21) de matériau photosensible,
- transférer ledit premier profil diffractif sur une plaque métallique (23),
- imprimer ledit premier profil diffractif de ladite plaque métallique sur un support en matière plastique (24),
- déposer une seconde couche (25) de matériau photosensible sur ledit support en matière plastique, et
- obtenir un second profil diffractif (30) en codant un code d'informations, sur ladite seconde couche de matériau photosensible, sur la même région ayant ledit premier profil diffractif (20),
**caractérisé en ce que** ledit code de commande et ledit code d'informations sont fabriqués de telle manière à ce que le premier soit susceptible de fonctionner en tant que clé de lecture pour le deuxième.

22. Processus selon la revendication 21, dans lequel ladite première couche (21) de matériau photosensible est constituée d'un matériau photosensible de type positif.

23. Processus selon la revendication 21 ou 22, dans lequel ladite seconde couche (25) de matériau photosensible est constituée d'un matériau photosensible de type négatif.
